Europäisches Patentamt

European Patent Office

Office européen des brevets

(11) Publication number: **0 343 310**
**A1**

(19)

(12) **EUROPEAN PATENT APPLICATION**

(21) Application number: **88810333.0**

(22) Date of filing: **25.05.88**

(51) Int. Cl.⁴: **C09D 11/02 , B41M 1/30 , //B42D15/02**

(43) Date of publication of application:
**29.11.89 Bulletin 89/48**

(84) Designated Contracting States:
**AT BE CH DE ES FR GB GR IT LI LU NL SE**

(71) Applicant: **SICPA HOLDING S.A.**
**Burgstrasse 17**
**CH-8750 Glarus(CH)**

(72) Inventor: **Amon, Philippe**
**Av. Secrétan 26**
**CH-1005 Lausanne(CH)**
Inventor: **Sneddon, Gordon**
**1C St. Johns Court Farncombe Street**
**GB-Farncombe Surrey GU7 3BA(GB)**
Inventor: **Bisset, Don**
**35 Station Road Orpington**
**GB-Kent BR6 ORZ(GB)**

(74) Representative: **Mohnhaupt, Dietrich et al**
**Ammann Patentanwälte AG Postfach 2614**
**CH-3001 Bern(CH)**

(54) **Printing ink for plastics with enhanced lamination properties, and printing method.**

(57) A generally binderless offset printing ink for the printing of plastic cores which are subsequently laminated with plastic sheets to durably enclose the core. Due to the composition of the ink, the plastic sheets perfectly adhere everywhere to the core. The fixation of the ink takes place during thermal lamination. The printing ink is used in the preparation of certain security documents such as credit cards.

EP 0 343 310 A1

## Printing ink for plastics with enhanced lamination properties, and printing method

### FIELD OF THE INVENTION

This invention belongs to the field of printing inks. More particularly, it is related to the printing of a generally flat plastic core which is subsequently laminated under heat and pressure between clear or transparent sheets of plastic, typically in the manufacture of credit cards.

### BACKGROUND OF THE INVENTION

The printing and subsequently laminating of a plastic core on one or both sides with clear plastic sheets under the influence of heat and pressure is already known. A common problem is the lack of adhesion between the printed areas of the core and the plastic overlays. This is because the ink, to a greater or lesser extent, presents a barrier to the formation of a good bond between the plastic layers under the conditions of heat and pressure during lamination and during subsequent cooling to ambient temperature. The bond may fail because of insufficient cohesion within the ink layer or poor adhesion of the ink to the adjacent plastic layers or both.

Because of the effect of poor adhesion or cohesion of the printing ink within the bond, laminating failure may occur when the bond is stressed. In order to offset the effects of this possibility, it is usual to leave an unprinted margin between the printed area and the edge of the card. Such an unprinted margin prevents laminating failure at the edge of the card where it will be stressed in normal use, but it restricts freedom of design.

Another critical area of stress is in areas where the card may subsequently be embossed under heat and pressure or locally pyrolysed, for example by laser, to provide identification by digitised information or characters. Unless special precautions are taken, to be described later, bond failure may occur within the ink film or at its interface with the plastic layers close to the characters. This incipient failure provides an initiation path for extended delamination when the card is flexed and stressed subsequently, as it will be in normal use.

Printing of the core is known to be primarily carried out by silk screen printing, by wet lithography, dry offset or waterless offset.

For the best obtainable adhesion and cohesion of the laminate bond, silk screen inks have been preferred until now. This is because the nature of the silk screen printing process allows the use of relatively powerful solvents, e.g. ketones or esters, which in turn allow a wide choice of binding resins in the ink. After printing and while the ink is still wet, such solvents may incipiently attack the plastic surface to provide a "tooth" or "key". In such a system it is possible also to use as a binder resin a vinyl homopolymer or copolymer which may be thermoplastic during the subsequent lamination process after the ink is dry by solvent evaporation and whose constitution is such that it will wet the plastic core and laminating overlays because they are of like nature.

By this means, quite good cohesion and adhesion may be provided within the inked areas of the bonds between the plastic layers. Additionally the silk screen process allows the deposition of relatively thick films of printing ink and may provide stronger colours than is possible with the various offset processes which deposit much less ink.

The disadvantages of the silk screen process are that it is expensive, that it is slow compared with offset, and, more particularly, it cannot successfully reproduce ultrafine details in designs, e.g. microletter printing and the complicated guilloche patterns which are sometimes characteristic of the security aspects of, for example, the printing of credit cards and charge cards. In such cases recourse must be made to some variant of offset printing.

Offset printing machines have a transport and distribution system for printing inks made up of a multiplicity of rollers, some of which are made of elastomeric materials. Additionally the printing surface is a rubber "blanket". The roller system has a very large surface area which precludes the use of solvents in the printing ink which might evaporate during passage from the ink reservoir or duct and so cause a phenomenon known as poor press stability. This, coupled to the need for the materials in the ink not to attack or degrade, in some way, the elastomeric rollers or the printing blanket, imposes a quite severe limitation upon solvent choice. Such a restriction to solvents or diluents of low evaporation rates and low solvent power in turn restricts the choice of binding resins. In existing offset ink formulae, the diluents are restricted usually to petroleum distillates having a boiling range between 260°C and 320°C, and the dissolved binding media are typically vegetable drying oils or suitable alkyd modifications thereof perhaps modified again with resins, of which examples are rosin phenolics, rosin maleics or hydrocarbon resins.

Frequently the petroleum diluents are minimised in the formula because they tend to remain occluded within the ink film, even after it is physically dry at room temperature, and become driven off at the temperature of lamination when they may cause bubbling within the laminate. Also included in such formulae are so-called drier metal catalysts, typically transition metal salts of napthenic or octoic acid. In the presence of air and these catalysts, the unsaturated components of the drying oils or alkyd modifications will crosslink to form the dried ink film which allows subsequent handling of the printed core.

The process of oxidative crosslinking produces, as by-products, certain low molecular weight species which may also remain occluded, at room temperature, within the dry film. These fragments may also be driven off or further reacted at the temperature of lamination to cause imperfect bonding or discolouration or both.

The constitution of the dried offset film of such inks is such that it is substantially thermosetting and neither flows nor wets the core or the overlays at the temperature and pressure of lamination. A poor bond is thus formed. To overcome this, the offset film is sometimes overprinted with a clear silk-screen varnish of similar constitution to that mentioned earlier. Although the bond strength is thereby improved somewhat, the adhesion of the offset ink to the core plastic and its cohesive strength remain the weak links within the bond. Additionally the extra silk-screen stage increases the overall cost of the card manufacturing process.

A further disadvantage of offset ink variants is that they remain substantially fluid for some hours after printing until initiation and propagation of the oxidative crosslinking process is sufficiently complete for the printed sheets to be handled.

Before the oxidation curing process is completed to the point when the ink becomes a solid, fluid transfer of the ink can occur from the print to the back of the sheet above in the pile of printed work; a phenomenon known as set-off. For this reason, the number of sheets in a stack is kept small, and the stacks cannot be moved for some hours after printing unless great care is taken to avoid set-off.

To avoid the problem of set-off and difficult handling, use is sometimes made of inks which cure by radiation induced polymerisation. Such inks contain, in essence, a binder, a liquid acrylate or copolymer modification as a source of unsaturation, and a photoinitiator. When irradiated with ultraviolet light of suitable wavelength and intensity, the photoinitiator provides free radicals which propagate a series of addition polymerisation steps within the unsaturated ink film and terminate when the ink becomes a polymerised solid. Initiation, propagation and substantially, termination to a solid polymer all occur within small fractions of a second before the sheet is delivered to the pile of printed work, and set-off is thereby avoided and after-processing may be undertaken immediately.

However, as far as good lamination properties are concerned, the solid polymer, so formed, still suffers the same kind of problem as oxidation systems: it is thermosetting and neither flows nor wets the core or the overlay during the conditions of lamination, and so the resulting bond is poor. This situation is exacerbated by the fact that substantial shrinkage of the ink film (up to 15%) occurs during UV curing - this results in an extremely cohesive ink film, but with very poor adhesive properties.

To offset this problem, the film overlay is sometimes provided with a special adhesive coating which melts and bonds to the ink during the lamination process. As with oxidation systems however, the weak link is still the poor adhesion of the ink to the plastic core. Apart from the extra cost, the adhesive overlay sometimes moves relative to the core during lamination, thus promoting spoilage particularly ad the edges of the printed sheet.

It is also of great importance to understand that all the inks mentioned thus far, with the exception of the clear silk-screen varnish, contain coloured pigment. The pigment is present in both the wet ink and the dry film as a suspension of particulate material embedded in the binder medium. It is a matter of common experience that the greater the percentage, by weight, of the pigment to binder ratio, the worse the internal cohesion of the ink film. It may be speculated that the cohesion of the agglomerated crystals which go to make up the pigment particles is thereby poor and that there is an increasing insufficiency of binding medium to wet thoroughly all the pigment agglomerates and so provide cohesive strength. Whatever the cause, the high tinctorial strength demanded of many inks for laminated cards requires high pigment loadings leading to pigment/binder ratios inappropriate to the experience of good bond strength.

In conclusion, no printing ink is yet available for offset processes suitable to the printing of core material for plastic cards which at one and the same time combine all the following criteria:

1. Provides a bond strength in the inked areas akin to that in the uninked areas after lamination.

2. Can therefore withstand completely the stresses encountered in use, in particular, at the extreme edge of the card and where it is embossed or otherwise encoded.

3. Can be printed by any variant of the offset process at high tinctorial strength.

4. Can print any image appropriate to normal offset printing including solids, half-tones, fine lines and microletters over the complete card surface if necessary.

BRIEF OBJECTS OF THE INVENTION

It is therefore a first and major object of the present invention to provide printing inks, printable by the offset printing method or a variant thereof, which confer excellent laminate adhesion to a plastic core printed with such inks even if the printed surface area is 100 percent of the core surface area.

It is another object of the invention to provide such inks which allow, when printed, the achievement of an excellent lamination with normal, uncoated overlay in a variety of thicknesses as required, thus avoiding the problems sometimes encountered with adhesive coated overlays, such as print distortion during lamination.

It is a further object of this invention to enhance the durability of printed and laminated cards so that any partial or total delamination does not occur during the normal lifetime and usage.

Still another object is to provide printing inks which extend the range of practical printing designs available to the manufacturers of the plastic products; allowing both large solids printing and fine details reproduction as required over the whole surface of the plastic if necessary.

A further object of the invention is to provide printing inks of the above depicted kind which allow to achieve strong colours printing at normal offset printing film weights, stronger than currently achievable in some cases.

Still a further object is to provide printing inks for plastic cores to be laminated where lamination can be carried out effectively, either immediately after printing or several hours, days or weeks after printing.

Another object of the invention is the manufacture of a durable multilayer security card by printing of one or more of the required layers in the offset technique with a surface coverage of up to 100 % giving the material the required coloured appearance or allowing implementation of invisible security features, where there is no limitation for the design to be created, and printing of complicated line works such as guilloches or microprinting as well as simple geometric patterns is possible.

Still another object of this invention is a method for the manufacture of plastics laminated security documents having a plastics core where the subsequent lamination does not require the use of specifically treated overlayers or the application of thermoplastic coatings in order to achieve keying of the printed surface to the core or the overlayer but leading under standard lamination conditions to perfect adherence between the various layers of the before said sandwich.

A futher object of the invention is a security plastics card manufactured in this new and highly economical technique showing improved durability during circulation and being perfectly resistant to various encoding techniques such as embossing or individualization by lasers.

It is still a further object of the invention to facilitate the printing and lamination of plastic surfaces by reducing the number of process steps involved, e.g. screen overvarnishing and different workings, by avoiding problems associated with coated overlay, by reducing wastage due to the more effective lamination performance, by allowing effective lamination to be independent of time after printing, and by allowing laser embossing to be carried out on the printing areas.

SUMMARY OF THE INVENTION

Now to implement the objects mentioned above and still others, the invention provides an ink printable by all variants of the offset method, e.g. wet lithography, dry offset and waterless offset, onto a flat plastic core for subsequent lamination to produce finished credit cards, charge cards, membership cards, identity cards, access cards and the like, wherein the ink contains a colouring material and a vehicle which is selected from medium and high molecular weight liquid compounds having an affinity to the plastic substrate and the plastic lamination material and being compatible with the said colouring material. Furthermore, the ink may comprise a thermoplastic material selected from polymers which have an affinity to the plastic substrate to be printed and to the lamination material.

In the inks of the invention, a binder is normally not necessary. It has quite surprisingly been found that the plastic materials involved, being superficially attacked by the vehicle, serve themselves as the binder for the colouring materials.

It becomes evident from this general definition of the new offset printing ink that the unique simplicity of its composition is outstandingly surprising and opens a multitude of new possibilities in the art of printing, especially when it is recalled that ordinary printing inks have a very complex composition comprising a plurality of components. A further surprising feature is that the ink is normally void of binder materials, the plastic materials of the core and of the laminates serving as a binder phase.

## DETAILED DESCRIPTION OF THE INVENTION

The different components of the inks according to the invention will now be discussed in detail. The colouring material may be at least one dye, at least one pigment, or mixtures thereof.

The ink should contain no more than 50% and no less than 0.1% colouring material. Ideally the ink should contain from 15% to 40% colouring material. These percentages are by weight and refer to the total weight of the ink.

Part or all of the colouring material may be invisible under normal light, but visible when stimulated by some external source of radiation or heat. For example, the ink may contain a UV fluorescent material.

The colouring material, in some formulations, may become substantially solubilised in the vehicle medium or sublime in the vehicle medium, or both.

The choice of colouring material in the case of wet offset applications is restricted to pigments and to substantially water insoluble dyestuffs, e.g. polymer soluble dyes, solvent soluble dyes and dispersed transfer dyes.

For dry and waterless offset formulations the aforementioned colouring materials can be used as well as aqueous dyes, e.g. acidic and basic dyestuffs.

The vehicle consists of at least one medium or high molecular weight liquid component compatible with the plastic substrate (i.e. good wetting) and compatible with the colouring material as well as other additives such as thermoplastic polymers.

The molecular weight of the meduim or high molecular weight compounds is generally comprised between 200 and 20,000, more specifically between 400 and 8,000.

Typically, the liquid component may be one or more medium or high molecular weight plasticisers, for example polyester adipate, or, alternatively or additionally, at least one acrylate resin or modified acrylate resin. For example, epoxy acrylates, urethane acrylates, polyester acrylates, chlorinated polyester acrylates or saturated acrylates may be used.

Generally, the amount of liquid vehicle in the ink is comprised between about 50% and about 90% by weight of the total weight of the ink.

In addition, the vehicle may contain a solvent or viscosity reducer selected from the same classes, e.g., acrylate monomer or pre-polymer or low molecular weight plasticiser, e.g. dioctylphthalate.

Typically, the level of solvent/reducer in the overall ink formulation is 0 to 30%, ideally 0 to 10% by weight of the total.

In addition, the liquid vehicle may or may not contain a thermoplastic material which is compatible with the substrate to be printed and, additionally, may be or not capable of being ground into the liquid component or capable of forming a plastisol in combination with the liquid vehicle.

Typically, the thermoplastic material may be a vinyl copolymer or homopolymer, e.g. polyvinyl chloride/polyvinyl acetate copolymer or polyvinyl chloride homopolymer.

The average particle size of this thermoplastic powder, once ground into the ink, should be less than 10 microns, ideally less than 2 microns.

The level of thermoplastic powder should be 0 to 50%, ideally 0 to 15% by weight of the total ink. The thermoplast may perform two principle functions, namely:

1. Change the physical properties of the ink during and after lamination, i.e.: plastisol formation;
2. modify the rheological properties of the ink without adversely affecting lamination.

With the ink of the invention, the adhesion of the overlay and the strength of the bond between the overlay and the plastic core is similar in the inked areas to the uninked areas when the card is finished under the usual conditions of lamination; typically, in the case of PVC, 110° C to 170° C during a 5 minutes to 1 hour lamination cycle according to the card manufacturers finishing practice.

So far as printability is concerned, the ink is designed to reproduce images ranging from 100% solid coverage to ultra-fine microletters at least as well as conventional offset inks currently known to the art. In addition, the ink of the invention has a capacity, unlike conventional oxidation offset inks based upon resinated drying oils and alkyd mdifications thereof, to "set" on plastics. Provided the ink is applied at no more than the usual offset film thickness of 2 microns, it is possible to print quite large stacks of work,

5

relative to what is possible with conventional inks under the same conditions, without set-off. In this regard it must be recognised that although fluid transfer of ink to the sheet above in a stack of work is the mechanism of set-off, the effect is exacerbated if, for example, precautions are not taken to avoid the retention of static charge in the sheets which otherwise draws them intimately together in the pile of work. The ink of the invention assumes that such usual precautions will be taken in use.

The term "set" when applied to printing inks, sometimes in the case of conventional drying-oil variants of printing inks, implies a preferential penetration or evaporation of some component of the formula after printing which leaves the ink stiffened or "set". It is this rapid stiffening or "setting" which brings the ink to a condition where it is mechanically sufficiently close to a solid not to suffer fluid transfer to the sheet above.

Sometimes, again, the term "setting" is applied to a condition where the ink continues to remain substantially as fluid as when it was printed, but thoroughly wets the surface of the substrate to the extent that the solid substrate and the fluid ink in combination effectively comprise a solid. A well-known example is that of newsprint where the print has sufficient mechanical strength substantially to resist marring of the image or fluid transfer even though the printing ink itself remains a fluid.

Within the context of this invention it is this latter connotation of "setting" which is implied.

The claimed ink formulation involves a dye, or a pigment or combination of pigment/dyestuff in conjunction with a vehicle medium, printable by all variants of the offset process, that will wet the surface of plastics, for example, PVC.

As described, the ink is designed to remain a fluid after printing, and not to be cross-linked chemically after the fashion of oxidation inks or radiation cured inks known to the art before lamination is commenced. However, the fluid ink, when printed at 2 microns film thickness, and the plastic substrate together, provide a print having sufficient mechanical strength to avoid set-off and marring of the image under the conditions of handling normally practised by printers before lamination.

Crucial to the invention are the physical and/or chemical changes which occur in the ink during the process of lamination where one or both of a combination of circumstances may occur, according to the ink formulation.

In one type of formulation a plastisol is formed at the temperature and pressure of lamination whose constitution is similar in nature to that of the core substrate and the laminating overlay and therefore retains excellent adhesion to both. The cohesive strength of the said plastisol is high and the bond formed is very strong.

Alternatively or simultaneously, according to the formula in question, the vehicle or varnish heat thickens, chemically, physically or both, in situ, during the process of lamination whilst retaining its property of wetting the core substrate and the laminating overlay, and so provides the adhesive and cohesive strength necessary to the performance of the ink according to the invention.

Crucial also to the preferred embodiments of the invention is the simultaneous formation of a solution or dyesol of the colouring materials in the vehicle medium under the conditions of heat and pressure during lamination. The dyestuff might not necessarily have been in a condition of complete or near complete solution at the time of the supply and the printing of the ink, but the formula is contrived in such a way that it will, in any event, become a solid dye solution during the lamination process.

There are two important consequences of dyesol formation in the application of this invention. Firstly, the tinctorial strengths of dye solutions are generally greater than pigment dispersions which has a beneficial effect in that more strongly coloured designs are possible than is usual when cards are printed by the offset process in which practical images are deposited at only about 2 microns thickness or less. Secondly, the disadvantage of a substantially reduced cohesive strength which is characteristic of dried ink films containing dispersed pigment particles embedded within them is consequently avoided, because after lamination the dye is present in the form of a solid solution.

Implicit in the disclosure is that sometimes the final colour of the ink, after lamination, may be very different from its colour as printed. This is particularly the case when the colourant selected is not very soluble in the vehicle medium of the printing ink, and only becomes so during the process of lamination. Furthermore, some dyes which have been found useful in the application of the invention have the property of subliming at the temperature of lamination, and thereby, momentarily diffuse as a vapour into the polymeric structure of the core and laminating overlay. It has been found that this mechanism produces a particularly useful and powerful intensification of colour.

Moreover, it has been found that the colour change is predictable and reproducible for a particular ink at a particular film thickness and not much affected over the temperature range of $110°C$ to $170°C$ commonly encountered in existing laminating procedures.

In the supply of offset inks for these applications, ink makers commonly provide a laboratory proof of inks upon the substrate discussed as a guide for the printer to assess final colour development against a particular printing weight. In the case of the inks claimed by this invention it will be helpful to supply a laboratory proof at a controlled film thickness on the core material, before and after lamination, as a guide to the strength to be run on the press in order subsequently to achieve the correct hue and strength in the laminated structure.

In another embodiment of the invention, the colour change before and after lamination can be much reduced by using a pigment instead of a dye in the formulation. In some particular formulations the problem of low cohesive strength inherently caused by the presence of dispersed pigment can be largely offset by using the pigment dispersed in a plastisol-type ink vehicle. In this case the formation of a plastisol, if carefully controlled during lamination, can increase the cohesion of the ink film sufficiently whilst maintaining good wetting of the core and the laminate. The resultant laminate adhesion may be slightly less than in the case of the dye-based inks, although in some cases this reduction in strength is offset by the greater ease of colour prediction for the printer.

In another embodiment of the invention, combinations of dye and pigment are used to achieve properties intermediate between the two cases already mentioned.

The invention will become more fully understood by the following Examples which, however, do not limit the invention thereto and are only given for explanation purposes.

## General procedure of ink manufacture

The inks are typically prepared in the form of concentrated basic formulations. The different components are weighed out and mixed together in a high torque mixer. The mixture thus obtained is then milled on a triple roller mill to a grind suitable for offset printing.

When concentrated formulations are prepared, the amounts of the components are selected to obtain an ink concentrate comprising about 30 to 40% by weight of colouring material. The concentrate may then be diluted with further amounts of the liquid vehicle and the viscosity reducer.

Optimum printing ink rheology may be obtained by the appropriate addition of a viscosity reducer, a varnish or a varnish and a thermoplast.

In the following examples, the general procedure of preparation outlined above has been followed. Therefore the Examples only mention the final composition of the offset printing inks of this invention. All percentages are by weight.

| Example 1 | |
|---|---|
| Plasticiser(a) and dye(b) | |
| | % |
| a) Paraplex G59 | 85 |
| b) Polymer soluble blue dye | 15 |

| Example 2 | |
|---|---|
| Plasticiser(a), dye(b) and thermoplast(c) | |
| | % |
| a) Paraplex G59 | 75 |
| b) Polymer soluble blue dye | 15 |
| c) Vinnol P70F (PVC) | 10 |

| Example 3 | |
|---|---|
| Plasticiser(a), dye(b), pigment(c) and thermoplast(d) | |
| | % |
| a) Paraplex G59 | 75 |
| b) Polymer soluble yellow dye | 13 |
| c) Carbon black | 2 |
| d) Vinnol P70F (PVC) | 10 |

| Example 4 | |
|---|---|
| Plasticiser(a), pigment (b) and thermoplast(c) | |
| | % |
| a) Paraplex G41 | 75 |
| b) Phtalocyanin green pigment | 15 |
| c) Vinnol P70F | 10 |

| Example 5 | |
|---|---|
| Acrylate(a) and dye(b) | |
| | % |
| a) Setalin AC 973 | 85 |
| b) Polymer soluble yellow dye | 15 |

| Example 6 | |
|---|---|
| Acrylate(a), dye(b) and thermoplast(c) | |
| | % |
| a) Setalin AC 973 | 75 |
| b) Polymer soluble yellow dye | 15 |
| c) Vinnol P70F | 10 |

| Example 7 | |
|---|---|
| Acrylate(a), dye(b) and pigment(c) | |
| | % |
| a) Setalin AC 973 | 85 |
| b) Polymer soluble yellow dye | 14 |
| c) Carbon black | 1 |

| Example 8 | |
|---|---|
| Acrylate(a), dye(b), pigment(c) and thermoplast(d) | |
| | % |
| a) Setalin AC 973 | 75 |
| b) Polymer soluble yellow dye | 14 |
| c) Carbon black | 1 |
| d) Vinnol P70F | 10 |

| Example 9 | |
|---|---|
| Acrylate(a), plasticiser(b) and dye(c) | |
| | % |
| a) Actocryl 300 | 50 |
| b) Paraplex G30 | 35 |
| c) Polymer soluble yellow dye | 15 |

| Example 10 | |
|---|---|
| Acrylate(a), plasticiser(b), dye(c) and thermoplast(d) | |
| | % |
| a) Actocryl 300 | 45,6 |
| b) Paraplex G30 | 29,4 |
| c) Polymer soluble yellow dye | 15 |
| d) Vinnol P70F | 10 |

| Example 11 | |
|---|---|
| Plasticiser(a) and pigment(b) | |
| | % |
| a) Paraplex G41 | 85 |
| b) Phtalocyanin blue pigment | 15 |

| Example 12 | |
|---|---|
| Plasticiser(a), dye(b) and pigment(c) | |
| | % |
| a) Paraplex G41 | 85 |
| b) Polymer soluble yellow dye | 10 |
| c) Phtalocyanin blue pigment | 5 |

PVC plastic cards where printed by the offset method with each of the above described inks, in a thickness comprised between 1.0 and 1.8 microns.

The printed cards could be stacked without set-off. They were laminated with a PVC plastic sheet on both faces under heat (temperature about 130° C) and pressure.

The adhesion and cohesion of the surface laminates were excellent and the same for the printed and unprinted areas. No peeling has been observed during embossing nor on destruction of samples by bending.

**Claims**

1. A printing ink for the printing of a generally flat plastic core surface which is subsequently laminated under heat and pressure between transparent sheets of plastic, said ink containing a colouring material and a vehicle, wherein said vehicle is selected from medium and high molecular weight liquid compounds having an affinity to the material of said plastic core and to said transparent sheets of plastic, and being compatible with the said colouring material, said ink being adapted to be printed by the offset printing method and its variants.

2. The printing ink of claim 1, wherein said liquid vehicle is selected from one or more high molecular weight plasticisers for the said plastics material of said core and said transparent sheets, and one or more acrylate or modified acrylate resins, and their mixtures.

3. The printing ink of claim 1, wherein said liquid vehicle is present in an amount of from about 50 to about 90% by weight of the total ink.

4. The printing ink of claim 1, wherein said colouring material is selected from one or more dyes, one or more pgiments, and their mixtures.

5. The printing ink of claim 1, wherein said colouring material is present in an amount of from about 0.1 to about 50% by weight of the total ink.

6. The printing ink of claim 5, wherein said colouring material is present in an amount of from about 15 to about 40% by weight of the total ink.

7. The printing ink of claim 1, wherein at least part of the colouring material is invisible under normal light but visible when stimulated by an external source of radiation or heat.

8. The printing ink of claim 1, wherein said colouring material is solubilised in the vehicle or/and sublimes in the vehicle medium, at least under the conditions of said lamination step.

9. The printing ink of claim 2, wherein the liquid vehicle further contains a low molecular weight viscosity reducer dissolved therein, selected from acrylate monomers, acrylate pre-polymers and low molecular weight plasticisers for the said plastic materials.

10. The printing ink of claim 9, wherein said viscosity reducer is present in an amount of from 0 to about 30% by weight of the total ink.

11. The printing ink of claim 1, further comprising a thermoplastic material compatible with the substrate to be printed and with the plastic material of the laminate.

12. The printing ink of claim 11, wherein the said thermoplastic material is selected to form a plastisol in combination with said liquid vehicle, at least under the conditions of said lamination step.

13. The printing ink of claim 11, wherein said thermoplastic material is selected from vinyl copolymers and homopolymers such as polyvinyl chloride/polyvinyl acetate copolymer or polyvinyl chloride homopolymer.

14. The printing ink of claim 11, wherein the ink contains from 0 to 50% by weight of said thermplastic material, referred to the total weight of the ink.

15. The printing ink of claim 14, wherein the concentration of said thermoplastic material is from 0 to 15% by weight of the total weight of the ink.

16. A method for the manufacture of plastic laminated security documents, comprising the following steps:

(A) providing a flat plastic core,

(B) printing said plastic core by an offset printing method including offset printing variants with at least one ink as defined in claim 1, and

(C) laminating the core surfaces printed in step (B) with a clear, transparent plastic sheet at a temperature comprised between about 110° and about 170° C.

17. The method of claim 16, wherein the printing step (B) is conducted to apply an ink thickness of about 2 microns or less onto said plastic core.

18. The method of claim 16, wherein the said ink forms a plastisol during the lamination step (C) whose composition is similar in nature to that of the core and plastic sheets materials.

19. The method of claim 16, wherein an ink is used which forms, under the conditions of said lamination step (C), a dye solution in the said vehicle.

20. A security document comprising a printed plastic core which is laminated on both faces with transparent plastic sheets, manufactured essentially by the method of claim 16.

21. The security document of claim 20 which is a credit card.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 544 873 (G.M. ADAMS) * Claim 1; column 3, example I * | 1 | C 09 D 11/02 B 41 M 1/30 // B 42 D 15/02 |
| A | | 2-5,9, 11,13, 14 | |
| Y | EP-A-0 086 282 (JOH. ENSCHEDE EN ZONEN GRAFISCHE INRICHTING) * Claims * | 1 | |
| A | | 16,20 | |
| A | US-A-3 035 933 (P.F. WARNER) | | |
| A | DE-A-1 471 726 (TOYO KAKO CO.) | | |
| A | FR-A-2 124 443 (ADDRESSOGRAPH-MULTIGRAPH CO.) | | |

TECHNICAL FIELDS SEARCHED (Int. Cl.4)

C 09 D
B 41 M

The present search report has been drawn up for all claims

| Place of search | Date of completion of the search | Examiner |
|---|---|---|
| THE HAGUE | 27-01-1989 | GIRARD Y.A. |

EPO FORM 1503 03.82 (P0401)